# EUROPEAN PATENT APPLICATION

(11) **EP 4 746 350 A1**
(43) Date of publication of application: **20.05.2026**
(21) Application number: 25212189.2
(22) Date of filing: 29.10.2025
(51) Int. Cl.: H04L 9/40, G06F 21/32, G06F 21/62, H04W 12/02, G06V 40/16

(54) **USER IDENTITY VERIFICATION WITHOUT SHARING BIOMETRIC DATA WITH PLATFORMS**

(30) Priority: 15.11.2024 US 202463721353 P; 09.10.2025 US 202519354033
(71) Applicant: Meta Platforms, Inc., Menlo Park, CA 94025 (US)
(72) Inventor: IP, Shing Sheung Daniel, Menlo Park, 94025 (US)
(74) Representative: Murgitroyd & Company

(57) **Abstract**

A system and method for determining an identity verification of a user(s) are provided. The system may implement a machine learning model including training data pre-trained, trained in real-time, or periodically trained based on one or more faces of users. The system may determine whether a plurality of embeddings of a communication device associated with an image or a video of a face of at least one user includes a first similarity to a plurality of randomly generated embeddings generated by a network device. The system may receive, by the network device, a first plurality of similarity scores associated with the first similarity without receiving the plurality of embeddings of the communication device. The system may determine a second plurality of similarity scores denoting whether a second plurality of embeddings generated by the network device.

## Description

### TECHNOLOGICAL FIELD

Example aspects of this disclosure may relate generally to methods, apparatuses and computer program products for providing techniques that facilitate face recognition and/or identity verification for access to platforms, networks, systems, or the like.

### BACKGROUND

Currently, some existing systems performing face recognition technology typically require biometric data to be processed by the system. To do face recognition and face matching, such may require biometric data of a user (e.g., an embedding(s)), which may denote or describe the face features to be generated. Since these existing systems may access the biometric data associated with users, such user biometric data may cause privacy risks for users.

As such, it may be beneficial to provide efficient and reliable mechanisms that provide identity verification by systems and to preserve user privacy by minimizing the providing of the biometric data associated with users attempting to be verified by a system.

### SUMMARY

According to a first aspect, there is provided a method comprising: implementing, by one or more computer processors coupled to memory, a machine learning model comprising training data pre-trained, trained in real-time, or periodically trained based on one or more faces of users; determining, by implementing the machine learning model, whether a plurality of embeddings of a communication device associated with an image or a video of a face of at least one user comprise a first similarity to a plurality of randomly generated embeddings generated by a network device; receiving, by the network device, a first plurality of similarity scores associated with the first similarity without receiving the plurality of embeddings of the communication device; determining, by implementing the machine learning model, a second plurality of similarity scores denoting whether a second plurality of embeddings generated by the network device associated with at least one image or at least one video of a face of a profile associated with a user comprise a second similarity to the plurality of randomly generated embeddings generated by the network device; and determining whether an identity of the at least one user is valid to access a network in response to determining whether a quantity of the first similarity scores in relation to the second similarity scores are correct satisfying a predetermined threshold.

In some embodiments, prior to the implementing the machine learning model comprising the training data, the method further comprises: receiving at least one communication of the at least one user requesting recovery of at least one account associated with the network or requesting the access to the network.

In some embodiments, the method further comprises determining that the identity of the at least one user is valid to access the network in response to determining that the quantity of the first similarity scores in relation to the second similarity scores are correct satisfying the predetermined threshold.

In some embodiments, the method further comprises: determining that the identity of the at least one user matches an identity of the user in the response to the determining that the quantity of the first similarity scores in relation to the second similarity scores are correct satisfying the predetermined threshold.

In some embodiments, the method further comprises: determining that the identity of the at least one user is invalid to access the network or invalid to recover an account associated with the network in response to determining that the quantity of the first similarity scores in relation to the second similarity scores fail to satisfy the predetermined threshold.

In some embodiments, the method further comprises: determining that without the receiving the plurality of embeddings of the communication device comprises not receiving biometric data of the at least one user from the communication device.

In some embodiments, receiving a first plurality of similarity scores associated with the first similarity without receiving the plurality of embeddings of the communication device comprises not receiving biometric data of the at least one user from the communication device.

In some embodiments, the first plurality of similarity scores comprises at least three similarity scores.

In some embodiments, the machine learning model is trained in real-time.

In some embodiments, the machine learning model is executed across a distributed computer network.

According to a further aspect, there is provided a system comprising: memory that stores computer-executable instructions; and at least one processor configured to access the memory and execute the computer-executable instructions to: implement a machine learning model comprising training data pre-trained, trained in real-time, or periodically trained based on one or more faces of users; determine, by implementing the machine learning model, whether a plurality of embeddings of a communication device associated with an image or a video of a face of at least one user comprise a first similarity to a plurality of randomly generated embeddings generated by a network device; receive a first plurality of similarity scores associated with the first similarity without receiving the plurality of embeddings of the communication device; determine, by implementing the machine learning model, a second plurality of similarity scores denoting whether a second plurality of embeddings generated by the network device associated with at least one image or at least one video of a face of a profile associated with a user comprise a second similarity to the plurality of randomly generated embeddings generated by the network device; and determine whether an identity of the at least one user is valid to access a network in response to determining whether a quantity of the first similarity scores in relation to the second similarity scores are correct satisfying a predetermined threshold.

In some embodiments, the at least one processor is further configured to access the memory and execute the computer-executable instructions to: receive, prior to the implementing the machine learning model comprising the training data, at least one communication of the at least one user requesting recovery of at least one account associated with the network or requesting the access to the network.

In some embodiments, the at least one processor is further configured to access the memory and execute the computer-executable instructions to: determine that the identity of the at least one user is valid to access the network in response to determining that the quantity of the first similarity scores in relation to the second similarity scores are correct satisfying the predetermined threshold.

In some embodiments, the at least one processor is further configured to access the memory and execute the computer-executable instructions to: determine that the identity of the at least one user matches an identity of the user in the response to the determining that the quantity of the first similarity scores in relation to the second similarity scores are correct satisfying the predetermined threshold.

In some embodiments, the at least one processor is further configured to access the memory and execute the computer-executable instructions to: determine that the identity of the at least one user is invalid to access the network or invalid to recover an account associated with the network in response to determining that the quantity of the first similarity scores in relation to the second similarity scores fail to satisfy the predetermined threshold.

In some embodiments, the at least one processor is further configured to access the memory and execute the computer-executable instructions to: determine that without the receiving the plurality of embeddings of the communication device comprises not receiving biometric data of the at least one user from the communication device.

In some embodiments, the at least one processor is further configured to access the memory and execute the computer-executable instructions to: receive a first plurality of similarity scores associated with the first similarity determine without receiving biometric data of the at least one user from the communication device.

In some embodiments, the first plurality of similarity scores comprises at least three similarity scores.

In some embodiments, the machine learning model is trained in real-time.

In some embodiments, the machine learning model is executed across a distributed computer network.

According to a further aspect, there is provided a method comprising: implementing, by one or more computer processors coupled to memory, a machine learning model comprising training data pre-trained, trained in real-time, or periodically trained based on one or more faces of users; determining, by implementing the machine learning model, whether a plurality of embeddings of a communication device associated with an image or a video of a face of at least one user comprise a first similarity to a plurality of randomly generated embeddings generated by a network device; receiving, by the network device, a first plurality of similarity scores associated with the first similarity without receiving the plurality of embeddings of the communication device; determining, by implementing the machine learning model, a second plurality of similarity scores denoting whether a second plurality of embeddings generated by the network device associated with at least one image or at least one video of a face of a profile associated with a user comprise a second similarity to the plurality of randomly generated embeddings generated by the network device; determining whether an identity of the at least one user is valid to access a network in response to determining whether a quantity of the first similarity scores in relation to the second similarity scores are correct satisfying a predetermined threshold; and determining that the identity of the at least one user is valid to access the network in response to determining that the quantity of the first similarity scores in relation to the second similarity scores are correct satisfying the predetermined threshold.

In some embodiments, prior to the implementing the machine learning model comprising the training data, the method further comprises: receiving at least one communication of the at least one user requesting recovery of at least one account associated with the network or requesting the access to the network.

Some examples of the present disclosure may provide techniques and mechanisms that facilitate efficient and reliable approaches to provide techniques that facilitate face recognition and/or identity verification for access to platforms, networks, systems, or the like.

Some example aspects of the present disclosure may solve the drawbacks of some existing systems by not requiring the biometric data of a user(s) to be shared with a network (e.g., a system), while enabling the network to still be able to verify that the embeddings associated with an image(s) or a video(s), generated associated with a user(s)), that a communication device of the user(s) has matches with the embeddings (e.g., generated based on a profile image(s), a tagged image(s), video(s), or the like) generated by the network and stored by the network, without sharing the actual biometric data associated with the user(s) with the network. In this manner, example aspects of the present disclosure may preserve privacy of users associated with a system(s).

Additional advantages will be set forth in part in the description which follows or may be learned by practice. The advantages will be realized and attained by means of the elements and combinations particularly pointed out in the appended claims. It is to be understood that both the foregoing general description and the following detailed description are example and explanatory only and are not restrictive, as claimed.

### BRIEF DESCRIPTION OF THE DRAWINGS

The summary, as well as the following detailed description, is further understood when read in conjunction with the appended drawings. For the purpose of illustrating the disclosed subject matter, there are shown in the drawings example embodiments of the disclosed subject matter; however, the disclosed subject matter is not limited to the specific methods, compositions, and devices disclosed. In addition, the drawings are not necessarily drawn to scale. In the drawings:
FIG. 1 is a diagram of an example network environment in accordance with an example of the present disclosure.
FIG. 2 is a diagram of an example communication device in accordance with an example of the present disclosure.
FIG. 3 is a diagram of an example computing system in accordance with an example of the present disclosure.
FIG. 4 is a diagram illustrating an example identity verification process associated with a positive case in which a user matches an identity known by a system in accordance with example aspects of the present disclosure.
FIG. 5 is a diagram illustrating another example identity verification process associated with a negative case in which a user may not match an identity known by a system in accordance with example aspects of the present disclosure.
FIG. 6 illustrates an example of a machine learning framework in accordance with one or more examples of the present disclosure.
FIG. 7 illustrates an example flowchart illustrating operations for determining face recognition and/or identity verification to access a platform(s), network(s), system(s), or the like in accordance with an example of the present disclosure.

The figures depict various embodiments for purposes of illustration only. One skilled in the art will readily recognize from the following discussion that alternative embodiments of the structures and methods illustrated herein may be employed without departing from the principles described herein.

### DETAILED DESCRIPTION

Some embodiments of the present invention will now be described more fully hereinafter with reference to the accompanying drawings, in which some, but not all embodiments of the invention are shown. Indeed, various embodiments of the invention may be embodied in many different forms and should not be construed as limited to the embodiments set forth herein. Like reference numerals refer to like elements throughout. As used herein, the terms "data," "content," "information" and similar terms may be used interchangeably to refer to data capable of being transmitted, received and/or stored in accordance with embodiments of the invention. Moreover, the term "example", as used herein, is not provided to convey any qualitative assessment, but instead merely to convey an illustration of an example. Thus, use of any such terms should not be taken to limit the scope of embodiments of the invention.

As defined herein a "computer-readable storage medium," which refers to a non-transitory, physical or tangible storage medium (e.g., volatile or non-volatile memory device), may be differentiated from a "computer-readable transmission medium," which refers to an electromagnetic signal.

As referred to herein, a Metaverse may denote an immersive virtual space or world in which devices may be utilized in a network in which there may, but need not, be one or more social connections among users in the network or with an environment in the virtual space or world. A Metaverse or Metaverse network may be associated with three-dimensional (3D) virtual worlds, online games (e.g., video games), one or more content items such as, for example, images, videos, non-fungible tokens (NFTs) and in which the content items may, for example, be purchased with digital currencies (e.g., cryptocurrencies) and other suitable currencies. In some examples, a Metaverse or Metaverse network may enable the generation and provision of immersive virtual spaces in which remote users may socialize, collaborate, learn, shop and/or engage in various other activities within the virtual spaces, including through the use of Augmented/Virtual/Mixed Reality.

As referred to herein, an embedding(s) may refer to a numerical representation of facial data. This may be a list of numbers of fixed length which may be unique to a user(s) and may be a mathematical vector representation of the facial features of a user(s). These embeddings may be examined to compare two faces. The closer the embeddings are to each other, the higher the likelihood that the embeddings represent the same face.

As referred to herein, biometric data, biometric content, or the like may refer to data representing the biometric characteristic(s) of personnel (e.g., people/persons), users, etc.

It is to be understood that the methods and systems described herein are not limited to specific methods, specific components, or to particular implementations. It is also to be understood that the terminology used herein is for the purpose of describing particular embodiments only and is not intended to be limiting.

### Example System Architecture

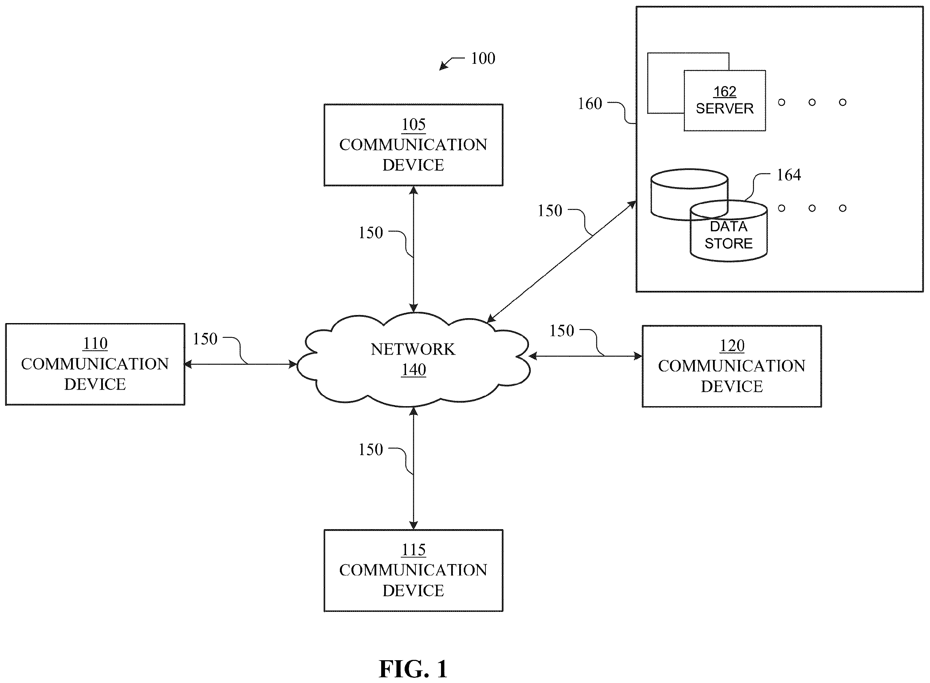

Reference is now made to FIG. 1, which is a block diagram of a system according to example embodiments. As shown in FIG. 1, the system 100 may include one or more communication devices 105, 110, 115 and 120 and a network device 160. Additionally, the system 100 may include any suitable network such as, for example, network 140. In some examples, the network 140 may be a Metaverse network. In other examples, the network 140 may be any suitable network capable of provisioning content and/or facilitating communications among entities within, or associated with the network. As an example and not by way of limitation, one or more portions of network 140 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. Network 140 may include one or more networks 140.

Links 150 may connect the communication devices 105, 110, 115 and 120 to network 140, network device 160 and/or to each other. This disclosure contemplates any suitable links 150. In some example embodiments, one or more links 150 may include one or more wireline (such as for example Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH)) links. In some example embodiments, one or more links 150 may each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link 150, or a combination of two or more such links 150. Links 150 need not necessarily be the same throughout system 100. One or more first links 150 may differ in one or more respects from one or more second links 150.

In some example embodiments, communication devices 105, 110, 115, 120 may be electronic devices including hardware, software, or embedded logic components or a combination of two or more such components and capable of carrying out the appropriate functionalities implemented or supported by the communication devices 105, 110, 115, 120. As an example, and not by way of limitation, the communication devices 105, 110, 115, 120 may be a computer system such as for example a desktop computer, notebook or laptop computer, netbook, a tablet computer (e.g., a smart tablet), e-book reader, Global Positioning System (GPS) device, camera, personal digital assistant (PDA), handheld electronic device, cellular telephone, smartphone, smart glasses, augmented/virtual reality device, smart watches, charging case, or any other suitable electronic device, or any suitable combination thereof. The communication devices 105, 110, 115, 120 may enable one or more users to access network 140. The communication devices 105, 110, 115, 120 may enable a user(s) to communicate with other users at other communication devices 105, 110, 115, 120.

Network device 160 may be accessed by the other components of system 100 either directly or via network 140. As an example and not by way of limitation, communication devices 105, 110, 115, 120 may access network device 160 using a web browser or a native application associated with network device 160 (e.g., a mobile social-networking application, a messaging application, another suitable application, or any combination thereof) either directly or via network 140. In particular example embodiments, network device 160 may include one or more servers 162. Each server 162 may be a unitary server or a distributed server spanning multiple computers or multiple datacenters. Servers 162 may be of various types, such as, for example and without limitation, web server, news server, mail server, message server, advertising server, file server, application server, exchange server, database server, proxy server, another server suitable for performing functions or processes described herein, or any combination thereof. In particular example embodiments, each server 162 may include hardware, software, or embedded logic components or a combination of two or more such components for carrying out the appropriate functionalities implemented and/or supported by server 162. In particular example embodiments, network device 160 may include one or more data stores 164. Data stores 164 may be used to store various types of information. In particular example embodiments, the information stored in data stores 164 may be organized according to specific data structures. In particular example embodiments, each data store 164 may be a relational, columnar, correlation, or other suitable database. Although this disclosure describes or illustrates particular types of databases, this disclosure contemplates any suitable types of databases. Particular example embodiments may provide interfaces that enable communication devices 105, 110, 115, 120 and/or another system (e.g., a third-party system) to manage, retrieve, modify, add, or delete, the information stored in data store 164.

Network device 160 may provide users of the system 100 the ability to communicate and interact with other users. In particular example embodiments, network device 160 may provide users with the ability to take actions on various types of items or objects, supported by network device 160. In particular example embodiments, network device 160 may be capable of linking a variety of entities. As an example and not by way of limitation, network device 160 may enable users to interact with each other as well as receive content from other systems (e.g., third-party systems) or other entities, or to allow users to interact with these entities through an application programming interfaces (API) or other communication channels.

It should be pointed out that although FIG. 1 shows one network device 160 and four communication devices 105, 110, 115 and 120, any suitable number of network devices 160 and communication devices 105, 110, 115 and 120 may be part of the system of FIG. 1 without departing from the scope of the present disclosure.

### Example Communication Device

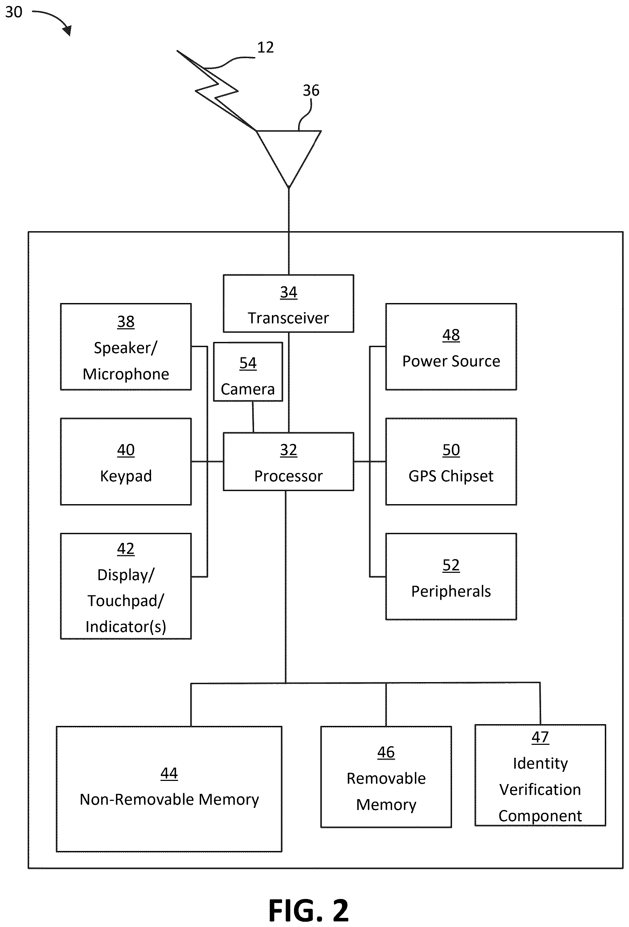

FIG. 2 illustrates a block diagram of an example hardware/software architecture of a communication device such as, for example, user equipment (UE) 30. In some example aspects, the UE 30 may be any of communication devices 105, 110, 115, 120. In some example aspects, the UE 30 may be a computer system such as for example a desktop computer, notebook or laptop computer, netbook, a tablet computer (e.g., a smart tablet), e-book reader, GPS device, camera, personal digital assistant, handheld electronic device, cellular telephone, smartphone, smart glasses, augmented/virtual reality device, smart watch, charging case, or any other suitable electronic device. As shown in FIG. 2, the UE 30 (also referred to herein as node 30) may include a processor 32, non-removable memory 44, removable memory 46, a speaker/microphone 38, a keypad 40, a display, touchpad, and/or user interface(s) 42, a power source 48, a global positioning system (GPS) chipset 50, and other peripherals 52. In some example aspects, the display, touchpad, and/or user interface(s) 42 may be referred to herein as display/touchpad/user interface(s) 42. The display/touchpad/user interface(s) 42 may include a user interface capable of presenting one or more content items and/or capturing input of one or more user interactions/actions associated with the user interface. The power source 48 may be capable of receiving electric power for supplying electric power to the UE 30. For example, the power source 48 may include an alternating current to direct current (AC-to-DC) converter allowing the power source 48 to be connected/plugged to an AC electrical receptable and/or Universal Serial Bus (USB) port for receiving electric power. The UE 30 may also include a camera 54. In an example embodiment, the camera 54 may be a smart camera configured to sense images/video appearing within one or more bounding boxes. The UE 30 may also include communication circuitry, such as a transceiver 34 and a transmit/receive element 36. It will be appreciated the UE 30 may include any sub-combination of the foregoing elements while remaining consistent with an embodiment.

The processor 32 may be a special purpose processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. In general, the processor 32 may execute computer-executable instructions stored in the memory (e.g., non-removable memory 44 and/or removable memory 46) of the node 30 in order to perform the various required functions of the node. For example, the processor 32 may perform signal coding, data processing, power control, input/output processing, and/or any other functionality that enables the node 30 to operate in a wireless or wired environment. The processor 32 may run application-layer programs (e.g., browsers) and/or radio access-layer (RAN) programs and/or other communications programs. The processor 32 may also perform security operations such as authentication, security key agreement, and/or cryptographic operations, such as at the access-layer and/or application layer for example.

The processor 32 is coupled to its communication circuitry (e.g., transceiver 34 and transmit/receive element 36). The processor 32, through the execution of computer executable instructions, may control the communication circuitry in order to cause the node 30 to communicate with other nodes via the network to which it is connected.

The transmit/receive element 36 may be configured to transmit signals to, or receive signals from, other nodes or networking equipment. For example, in an example embodiment, the transmit/receive element 36 may be an antenna configured to transmit and/or receive radio frequency (RF) signals. The transmit/receive element 36 may support various networks and air interfaces, such as wireless local area network (WLAN), wireless personal area network (WPAN), cellular, and the like. In yet another example embodiment, the transmit/receive element 36 may be configured to transmit and/or receive both RF and light signals. It will be appreciated that the transmit/receive element 36 may be configured to transmit and/or receive any combination of wireless or wired signals.

The transceiver 34 may be configured to modulate the signals that are to be transmitted by the transmit/receive element 36 and to demodulate the signals that are received by the transmit/receive element 36. As noted above, the node 30 may have multi-mode capabilities. Thus, the transceiver 34 may include multiple transceivers for enabling the node 30 to communicate via multiple radio access technologies (RATs), such as universal terrestrial radio access (UTRA) and Institute of Electrical and Electronics Engineers (IEEE 802.11), for example.

The processor 32 may access information from, and store data in, any type of suitable memory, such as the non-removable memory 44 and/or the removable memory 46. For example, the processor 32 may store session context in its memory, (e.g., non-removable memory 44 and/or removable memory 46) as described above. The non-removable memory 44 may include RAM, ROM, a hard disk, or any other type of memory storage device. The removable memory 46 may include a subscriber identity module (SIM) card, a memory stick, a secure digital (SD) memory card, and the like. In other example embodiments, the processor 32 may access information from, and store data in, memory that is not physically located on the node 30, such as on a server or a home computer.

The processor 32 may receive power from the power source 48, and may be configured to distribute and/or control the power to the other components in the node 30. The power source 48 may be any suitable device for powering the node 30. For example, the power source 48 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like. The processor 32 may also be coupled to the GPS chipset 50, which may be configured to provide location information (e.g., longitude and latitude) regarding the current location of the node 30. It will be appreciated that the node 30 may acquire location information by way of any suitable location-determination method while remaining consistent with an example embodiment.

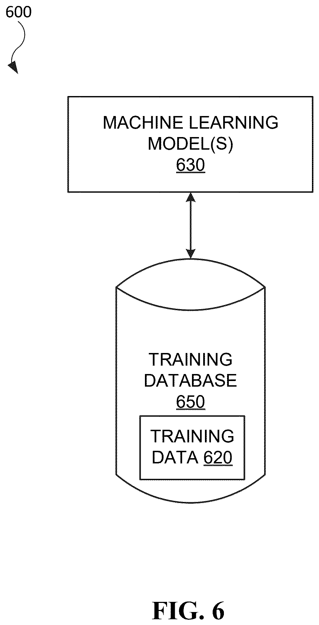

The UE 30 may also include an identity verification component 47 that may determine one or more embeddings based on an image(s), video(s), or the like of a user(s) captured and/or stored by the UE 30. In some examples, the embeddings (also referred to herein as face embeddings) generated by the UE 30 may be associated with an image(s), and/or video(s) of a face of a user(s) of the UE 30. The identity verification component 47 may also determine the similarity of the embeddings that the identity verification component 47 generated to embeddings generated by a network (e.g., a system 100, a network device (e.g., computing system 300)) and which may be provided to the UE 30 by the network. The identity verification component 47 may provide one or more answers, to the network, regarding the similarity of the embeddings that the identity verification component 47 generated to the embeddings generated by the network to enable the network to determine whether a face(s) (e.g., a face image) of a user of the UE 30 matches with a face(s) captured and/or stored by the network, as described more fully below. In some examples, the identity verification component 47 may implement a machine learning model and/or artificial intelligence (AI) model (e.g., machine learning model(s) 630 of FIG. 6) that may be pre-trained, trained in real-time, and/or trained periodically, with training data (e.g., training data 620 of FIG. 6).

### Example Computing System

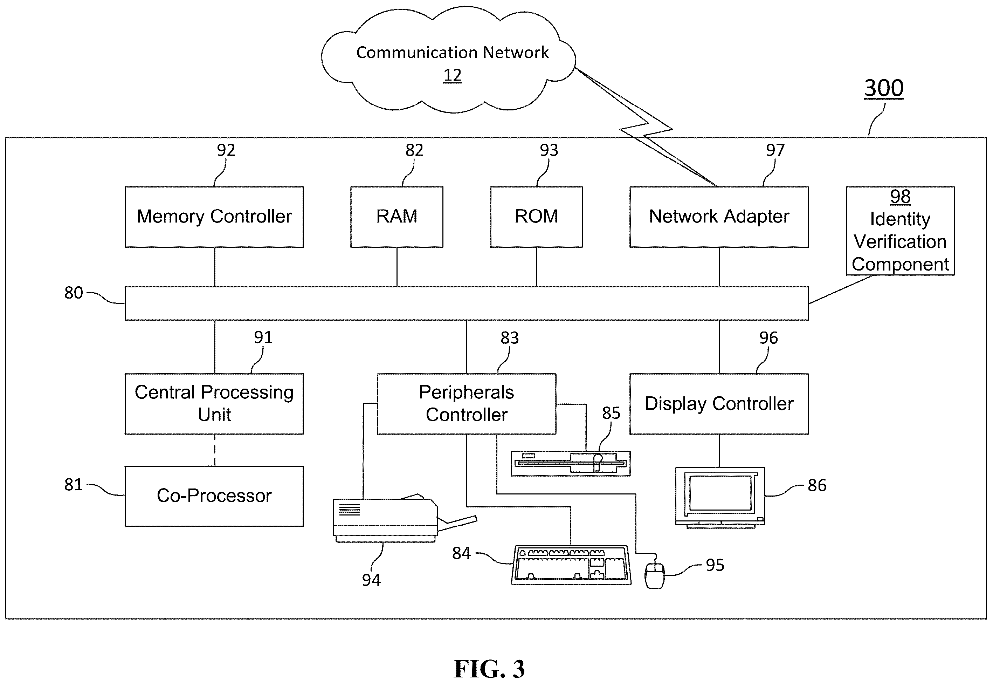

FIG. 3 is a block diagram of an example computing system 300. In some example embodiments, the network device 160 may be a computing system 300. The computing system 300 may comprise a computer or server and may be controlled primarily by computer readable instructions, which may be in the form of software, wherever, or by whatever means such software is stored or accessed. Such computer readable instructions may be executed within a processor, such as central processing unit (CPU) 91, to cause computing system 300 to operate. In many workstations, servers, and personal computers, central processing unit 91 may be implemented by a single-chip CPU called a microprocessor. In other machines, the central processing unit 91 may comprise multiple processors. Coprocessor 81 may be an optional processor, distinct from main CPU 91, that performs additional functions or assists CPU 91.

In operation, CPU 91 fetches, decodes, and executes instructions, and transfers information to and from other resources via the computer's main data-transfer path, system bus 80. Such a system bus connects the components in computing system 300 and defines the medium for data exchange. System bus 80 typically includes data lines for sending data, address lines for sending addresses, and control lines for sending interrupts and for operating the system bus. An example of such a system bus 80 is the Peripheral Component Interconnect (PCI) bus.

The computing system 300 may also include an identity verification component 98. The identity verification component 98 may provide approaches and techniques to facilitate identity verification detection (e.g., face detection/verification) of one or more users associated with a platform(s), system(s), network(s), or the like. In some examples, the identity verification component 98 may implement a machine learning model (e.g., machine learning model(s) 630 of FIG. 6) and/or an AI model that may be pre-trained, trained in real-time, and/or periodically trained with training data (e.g., training data 620 of FIG. 6) to facilitate identity verification detection of one or more users, as described more fully below.

In some examples, the identity verification component 98 may determine one or more embeddings based on an image(s), video(s), or the like. The identity verification component 98 may also determine the similarity of the embeddings generated by the identity verification component 98 of a network (e.g., system 100) and embeddings determined/generated by a communication device (e.g., UE 30) associated with a user(s). Additionally, the identity verification component 98 may determine a similarity score based on the similarity of the embeddings generated by the identity verification component 98 and the embeddings generated by the communication device and may evaluate the similarity score to determine whether the similarity score satisfies (e.g., equals or exceeds) a predetermined threshold to thus determine whether a face (e.g., a face image) of the user(s) captured and/or stored by the communication device of the user matches (e.g., a face match) with a face (e.g., a face image) of a user captured and/or stored by the network, as described more fully below.

Memories coupled to system bus 80 include RAM 82 and ROM 93. Such memories may include circuitry that allows information to be stored and retrieved. ROMs 93 generally contain stored data that cannot easily be modified. Data stored in RAM 82 may be read or changed by CPU 91 or other hardware devices. Access to RAM 82 and/or ROM 93 may be controlled by memory controller 92. Memory controller 92 may provide an address translation function that translates virtual addresses into physical addresses as instructions are executed. Memory controller 92 may also provide a memory protection function that isolates processes within the system and isolates system processes from user processes. Thus, a program running in a first mode may access only memory mapped by its own process virtual address space; it cannot access memory within another process's virtual address space unless memory sharing between the processes has been set up.

In addition, computing system 300 may contain peripherals controller 83 responsible for communicating instructions from CPU 91 to peripherals, such as printer 94, keyboard 84, mouse 95, and disk drive 85.

Display 86, which is controlled by display controller 96, may be used to display visual output generated by computing system 300. Such visual output may include text, graphics, animated graphics, and video. The display 86 may also include, or be associated with a user interface. The user interface may be capable of presenting one or more content items and/or capturing input of one or more user interactions associated with the user interface. Display 86 may be implemented with a cathode-ray tube (CRT)-based video display, a liquid-crystal display (LCD)-based flat-panel display, gas plasma-based flat-panel display, or a touch-panel. Display controller 96 includes electronic components required to generate a video signal that is sent to display 86.

Further, computing system 300 may contain communication circuitry, such as for example a network adaptor 97, that may be used to connect computing system 300 to an external communications network, such as network 12 of FIG. 2, to enable the computing system 300 to communicate with other nodes (e.g., UE 30) of the network.

### Example System Operation

Some examples of the present disclosure may provide approaches and techniques to facilitate face recognition and/or identity verification of one or more users associated with a platform(s), network(s), system(s), or the like. In some example aspects of the present disclosure, the face recognition and/or identity verification of the one or more users may enable the one or more users to access the platform(s), network(s), system(s) in response to verifying the one or more users based on the face recognition and/or identity verification, as described more fully below. Additionally, in some examples the face recognition and/or identity verification of the one or more users may enable a platform(s), network(s), system(s) to recover an account(s), of the platform(s), network(s), system(s), associated with the user.

In some existing systems even if an embeddings generation process may not be implemented on one device, a matching process of these existing systems still typically requires all the embeddings to be known by at least one entity (e.g., all embeddings of a face known both to a communication device (e.g., a UE 30) of a user and/or a network (e.g., network device)). In the identity verification space, face matching may be a technology that may be utilized to help a user(s) recover their account on a platform(s), network(s), or system(s), and/or to be verified for access to certain features associated with the platform(s), the network(s), or the system(s).

The access by at least one entity of all the embeddings associated with a face of a user(s) may be sensitive as it may relate to and involve the privacy associated with a user(s). For example, having all the biometric data associated with all the embeddings accessible by a network may cause privacy risks for the user(s). In some example aspects of the present disclosure, a network device (e.g., network device 160) may only need to determine an embedding(s) for the identity of a user known to the network device (e.g., and/or system 100), and may not require embedding(s) from a communication device to send the user's biometric data to the network device. On the other hand, some existing approaches may require both the embedding(s) determined on a communication device and the embedding(s) determined by a server device to be stored and accessible by the server device in order to perform a comparison on the embeddings to determine an identity of a user. Additionally, in some of the existing systems, a network may be unable to trust a communication device (e.g., UE 30) of a user(s) informing the network that a face(s) relates to the user(s) of the communication device.

In some existing systems, a user seeking identity verification to access a system or to recover their account associated with the system may utilize a communication device (e.g., UE 30) to capture an image(s) (e.g., a selfie image/photo) of the user and/or a video(s) (e.g., a selfie(s) video) of the user, and the image and/or video of the user may need to be sent to a network device of the network for processing, and detecting whether the image(s) and/or video(s) of the user matches with profile information stored by the network (e.g., a profile picture(s), or tagged images/photos) to confirm the identity of the user.

Unlike these existing systems, the example aspects of the present disclosure may preserve privacy of a user, by not sending the biometric data associated with an image(s) and/or video(s) of the user to a network to enable the network to verify the user. The biometric data may be associated with an image(s) and/or video(s) captured and/or stored on the communication device of the user.

Additionally, in some of the example aspects of the present disclosure, the network may not share the biometric data that it has with a communication device of a user, as the user may not be the person the user claims to be. For instance, the user may be a fraudulent user. As such, the example aspects of the present disclosure overcome the drawbacks of some existing systems that typically know all the embeddings by at least one entity of the existing system(s).

In some example aspects of the present disclosure, the identity verification component 98 may randomly generate numbers (e.g., a list(s) of numbers) and these numbers of the generated list(s) may be in pairs. The numbers in pairs of the generated list(s) may be embeddings generated by the identity verification component 98. As an example only, the pairs may be 100 pairs or any other suitable number of pairs (e.g., 10 pairs, 20 pairs, 30 pairs, 40 pairs, etc.). Each of the pairs may have first element (e.g., a left element) and a second element (e.g., a right element).

These randomly generated list of numbers (e.g., random embeddings) may not be biometric data associated with any user(s) and instead may be pseudo randomly generated numbers. The identity verification component 98 may send the randomly generated list of numbers (also referred to herein as network embeddings) to a communication device (e.g., UE 30) of a user. For purposes of illustration and not of limitation, the user of the communication device may desire to recover an account(s) with a network and/or verify their identity to obtain access to content from, or associated with, the network. In this regard, in response to the identity verification component 47 receiving the network embeddings, the identity detection component 47 may generate embeddings (also referred to herein as user device embeddings) to determine whether a communication device (e.g., UE 30) of the user has similar user device embeddings as the network device embeddings. The identity verification component 47 may generate the user device embeddings based on analyzing one or more features of an image(s) (e.g., a selfie image) and/or video(s) (e.g., a selfie video) of the users captured and/or stored by the communication device of the user. In some example aspects, the identity verification component 47 implement/execute a face embedding application and/or algorithm that may transform an image containing a face into a fixed mathematical space. In some examples, the face embedding application and/or algorithm may be a deep convolutional neural network associated with determining facial recognition. As long as the determined embeddings for the same person from two different input(s) result in embeddings more similar than that from two different persons, the similarity nature is established.

In response to the identity verification component 47 determining embedding from the input captured from a user/communication device, such as a selfie, the identity verification component 47 may determine which one of a random non-biometric embedding of each of the pairs, generated by the identity verification component 98 and which may be provided to the communication device of the user, being closer to the user device embedding that the identity verification component 47 generated. The identity verification component 47 determines the similarities between the user device embeddings and the random embeddings by performing a similarity technique, such as cosine similarity. Cosine similarity may be a measure of similarity between two non-zero vectors defined in an inner product space, which when fed/input two embeddings, determines the similarity. Other similarity functions (e.g., other than cosine similarity) that may measure the similarity between 2 vectors may be utilized by the example aspects of the present disclosure. The similarity determinations may be the answers to the described in some examples herein.

The identity verification component 47 may send its similarity determinations between the user device embeddings and the randomly generated network embeddings to a network device (e.g., computing system 300) of the network (e.g., system 100). In this regard, the identity verification component 98 may generate one or more embeddings based on media content such as, for example, a profile image(s) of a user(s) that may be stored (e.g., stored in RAM 82 and/or ROM 93) on the network device. In an account recovery context, the account being recovered may be identified. The network device may determine embeddings for media content associated with the identified account and may determine a profile image(s) associated with the account. The identity verification component 98 may then determine the correct answers (e.g., a similarity (e.g., based on a similarity technique (e.g., cosine similarity)). In this regard, the identify verification component 98 may determine the correct answers based on the one or more embeddings generated based on the profile picture(s) and the randomly generated network embedding pairs.

In this regard, the identity verification component 98 may determine whether there are similarities (e.g., similar responses/answers) between the one or more embeddings generated based on the profile picture(s) and similarities of the randomly generated network embedding pairs and the user device embeddings and the network embeddings determined by the identity verification 47. This determination regarding similarities by the identity verification component 98 may be performed for the pairs of the numbers (e.g., for the 100 pairs in this example) of the embeddings. In an instance in which the identity verification component 98 determines that a quantity/number of the pairs are similar (e.g., similar responses/correct answers) satisfying a predetermined threshold (e.g., 70%), the identity verification component 98 may determine that there is a high confidence that that the user of the communication device is the user associated with the profile picture(s) in this example. Thus, the identity verification component 98 may verify the identity of the user and may grant the user access to the network and/or may recover an account(s) of the user on the network on behalf of the user (e.g., in response to receiving a request from the user to recover the user's account).

On the other hand, in an instance in which the identity verification component 98 determines that a predetermined threshold (e.g., 70%) of the pairs are not satisfied (e.g., a quantity of similar responses/answers are below the predetermined threshold) regarding similarity, the identity verification component 98 may determine that there is a low confidence that the user of the communication device is the user associated with the profile picture(s) in this example. Thus, the identity verification component 98 may determine that the user is not verified regarding the identity of the user and may not grant the user access to the network and/or may not recover an account(s) of the network requested by the user. In this example, the predetermined threshold not being satisfied may denote that the number of pairs matching between the embeddings being compared may be lower than a required percentage/amount and are lower than the high confidence scenario in which the predetermined threshold is met/satisfied in which the user may be verified by the network device (e.g., the identity verification component 98 of the network device). In an instance in which the predetermined threshold is not satisfied, such may denote a low confidence which may denote that an identity of a user is not verified. In some examples, the predetermined threshold may be configurable. For example, the network device (e.g., computing device 300) may determine the percent of similarity and/or quantity/number of correct matches when determining the predetermined threshold. In this example, the communication device of the user did not provide their biometric data associated with their media content (e.g., a selfie image(s) of the user, a selfie video(s) of the user) itself to the network device (e.g., computing system 300).

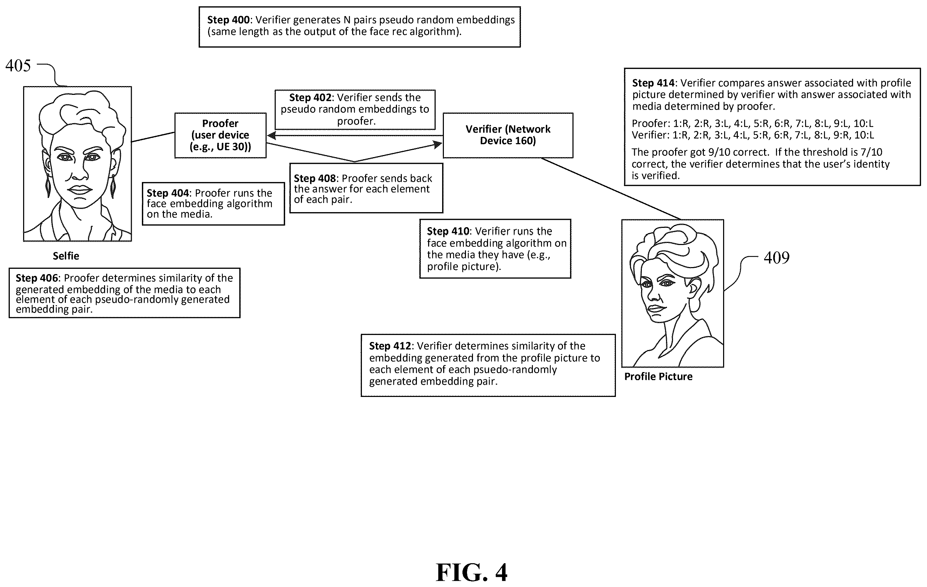

Referring to FIG. 4, a diagram illustrating an example identity verification process in accordance with an example of the present disclosure is provided. At step 400, the identity verification component 98 (verifier) may generate a number (N) of pairs of pseudo random embeddings. The pairs of pseudo random embeddings may be a randomly generated list(s) of numbers determined in the manner described above. The N pairs of pseudo random embeddings may have a same length as an output (e.g., biometric embedding) of the identity verification component 98. The number N may be tuned, by the identity verification component 98, thereby trading off computational efficiency with confidence and accuracy. For example, with a larger number N, a network device may have to compute/determine the similarity for more pairs of embeddings, which may increase computation cost. However, the larger the number N, the more consistent a confidence result may be, thus mitigating the uncertainty invoked by the randomness. As such, in some instances, there may be diminishing returns as the number N increases. In this example N may be 10. In other instances, N may be any other suitable number.

In the example of FIG. 4, the length of the embeddings may be 5. In other instances, the length of the embeddings may be any other suitable length. In this example, the N (e.g., N = 10) pairs of pseudo random embeddings having length 5 of embeddings may be as follows.
1. L = [0.76, 0.14, 0.03, 0.60, 0.17], R = [0.67, 0.06, 0.45, 0.45, 0.34]
2. L = [0.63, 0.14, 0.21, 0.16, 0.70], R = [0.45, 0.07, 0.74, 0.21, 0.42]
3. L = [0.47, 0.50, 0.56, 0.38, 0.23], R = [0.04, 0.04, 0.33, 0.90, 0.23]
4. L = [0.32, 0.60, 0.72, 0.04, 0.12], R = [0.40, 0.40, 0.40, 0.40, 0.60]
5. L = [0.06, 0.60, 0.53, 0.57, 0.10], R = [0.22, 0.48, 0.52, 0.55, 0.35]
6. L = [0.00, 0.51, 0.11, 0.70, 0.47], R = [0.56, 0.52, 0.36, 0.40, 0.32]
7. L = [0.41, 0.11, 0.56, 0.56, 0.41], R = [0.56, 0.08, 0.08, 0.80, 0.16]
8. L = [0.04, 0.28, 0.65, 0.56, 0.42], R = [0.37, 0.37, 0.21, 0.16, 0.80]
9. L = [0.27, 0.62, 0.27, 0.62, 0.23], R = [0.07, 0.37, 0.07, 0.63, 0.67]
10. L = [0.40, 0.66, 0.40, 0.26, 0.40], R = [0.35, 0.53, 0.13, 0.22, 0.71]

At step 402, the identity verification component 98 of the network device (e.g., computing system 300) may send the N pairs of pseudo random embeddings to a communication device (e.g., UE 30) of a user. For purposes of illustration and not of limitation, the identity verification component 98 may send the N pairs of pseudo random embeddings to the communication device of the user in response to receipt of a message from the communication device requesting access to the network and/or an account recovery of the user associated with the network.

At step 404, in response to receipt of the N pairs of pseudo random embeddings, the identity verification component 47 (proofer) of the communication device of the user may analyze media content such as, for example, an image of the user (e.g., a selfie image 405 of the user) and based on the image (e.g., the selfie image 405) of the user may determine an embedding(s) associated with the image such as for example [0.21, 0.13, 0.84, 0.05, 0.45]. In this regard, the identity verification component 47 may analyze the image and transform the image into a list of numbers (e.g., by applying a face recognition application). The list of numbers may be the generated embeddings. In an instance in which the face recognition application may be applied to faces of a same user/person even if the user/person is captured in different images, pictures, photos, or the like, the associated generated embeddings may be similar.

At step 406, the identity verification component 47 of the communication device of the user may determine a similarity of the embedding(s) the identity verification component 47 generated i.e., [0.21, 0.13, 0.84, 0.05, 0.45] to the N pairs of pseudo random generated embeddings received from the identity verification component 98. For each of the N = 10 pairs, the identity verification component 47 may determine whether the left element of the pair or the right element of the pair is more similar to the embedding(s) [0.21, 0.13, 0.84, 0.05, 0.45]. In some other examples, other similarity functions (e.g., other than cosine similarity techniques) may be utilized such as for example, L2 distance, dot product, or the like which may be utilized to determine similarity of two vectors of numbers. The similarity (sim) between the N pairs of pseudo random embeddings generated by the identity verification component 98, and the embedding(s) [0.21, 0.13, 0.84, 0.05, 0.45] generated by the identity verification component 47 may be determined by the identity verification component 47 of the communication device as follows as answers.
1: R, L sim = 0.32, R sim = 0.72
2: R, L sim = 0.67, R sim = 0.95
3: L, L sim = 0.77, R sim = 0.45
4: L, L sim = 0.82, R sim = 0.77
5: R, L sim = 0.62, R sim = 0.75
6: R, L sim = 0.41, R sim = 0.67
7: L, L sim = 0.80, R sim = 0.31
8: L, L sim = 0.82, R sim = 0.69
9: L, L sim = 0.51, R sim = 0.46
10: L, L sim = 0.71, R sim = 0.60

The identity verification component 47 of the communication device may determine the similarity between the N pairs of pseudo random embeddings generated by the identity verification component 98, and the embedding(s) [0.21, 0.13, 0.84, 0.05, 0.45] based in part on performing a, for example, cosine similarity technique. As an example of similarity determination of pairs, as to Pair 1, the identity verification component 47 may determine that the right element of the pseudo random embeddings is more accurate than the left element in relation to the embedding(s) [0.21, 0.13, 0.84, 0.05, 0.45] since the R sim is higher being 0.75 than the lower L sim 0.62. As another example of the similarity determination of pairs, as to Pair 2, the identity verification component 47 may determine that the right element of the pseudo random embeddings is more accurate than the left element in relation to the embedding(s) [0.21, 0.13, 0.84, 0.05, 0.45] since the R sim is higher being 0.67 than the lower L sim 0.41. Additionally, as another example of the similarity determination of pairs, as to Pair 3, the identity verification component 47 may determine that the left element of the pseudo random embeddings is more accurate than the right element in relation to the embedding(s) [0.21, 0.13, 0.84, 0.05, 0.45] since the L sim is higher being 0.77 than the lower L sim 0.45, so on and so forth. In some other examples, the similarity answers may be determined based in part on the identity verification component 47 implementing one or more techniques other than a cosine similarity technique. In some other examples, similarity functions (e.g., other than cosine similarity techniques) may be utilized such as for example, L2 distance, which may also be utilized for comparison of embeddings.

At step 408, the identity verification component 47 of the communication device may send the answers as 1: R, 2: R, 3: L, 4: L, 5: R, 6: R, 7: L, 8: L, 9: L, 10: L for each of the pairs (e.g., pairs 1, 2, 3, 4, 5, 6, 7, 8, 9 and 10 above) to the network device (e.g., computing system 300). In this regard, it is pointed out that the identity verification component 47 may not send any biometric data associated with the user of the communication device to the network device and may not send any embedding themselves to the network device and instead sent answers (i.e., an indication of which element of each pair is most accurate/similar) such as 1: R, 2: R, 3: L, 4: L, 5: R, 6: R, 7: L, 8: L, 9: L, 10: L for each of the 10 pairs to the network device.

At step 410, the identity verification component 98 may analyze media content such as, for example, a profile picture 409 of a user and in this regard the identity verification component 98 may generate an embedding(s) such as [0.20, -0.10, 0.85, 0.04, 0.46].

It is pointed out that the embedding(s) generated as [0.20, -0.10, 0.85, 0.04, 0.46] by the identity verification component 98 based on profile picture 409 are slightly different than the embedding(s) [0.21, 0.13, 0.84, 0.05, 0.45] generated by the identity verification component 47 based on the selfie image 405. Additionally, the identity verification component 98 may not send the embeddings it generated as [0.20, -0.10, 0.85, 0.04, 0.46] to the communication device of the user. In this manner, the privacy of the user may be preserved.

At step 412, the identity verification component 98 may perform a similar operation as step 406 and may determine a similarity of the embedding(s) generated based on the picture profile 409 such as [0.21, 0.13, 0.84, 0.05, 0.45] to the N pairs of pseudo random generated embeddings. In this regard, the identity verification component 98 may determine for each of the N = 10 pairs whether the left element is more similar or the right element is more similar to the N pairs of pseudo random generated embeddings. As such, the identity verification component 98 may determine the similarity (e.g., similarity scores) as the following answers as correct answers.
1: R, L sim = 0.27, R sim = 0.70
2: R, L sim = 0.63, R sim = 0.93
3: L, L sim = 0.65, R sim = 0.43
4: L, L sim = 0.68, R sim = 0.68
5: R, L sim = 0.48, R sim = 0.63
6: R, L sim = 0.29, R sim = 0.54
7: L, L sim = 0.77, R sim = 0.28
8: L, L sim = 0.76, R sim = 0.60
9: R, L sim = 0.36, R sim = 0.37
10: L, L sim = 0.56, R sim = 0.47

At step 414, the identity verification component 98 may compare the correct answers that it determined as 1: R, 2: R, 3: L, 4: L, 5: R, 6: R, 7: L, 8: L, 9: R, 10: L to the answers generated by the identity verification component 47 such as 1: R, 2: R, 3: L, 4: L, 5: R, 6: R, 7: L, 8: L, 9: L, 10: L. The correct answers may be determined in a manner similar to answering true or false questions, based on embeddings generated from media content a verifier has in comparison to pseudo random embeddings. There may be a correct answer(s) because it is computed/determined in relation to known trusted media content the verifier has. Based on the comparison, the identity verification component 98 may determine that the identity verification component 47 determined an incorrect/wrong answer pertaining to Pair 9, which the identity verification component 47 determined as 9: L, but which the identity verification component 98 determined the correct answer as 9: R.

In an instance in which the predetermined threshold of correct answers is 70% (e.g., 7/10 correct), the identity verification component 98 may determine that the identity of the user of the communication device (e.g., UE 30) is verified by the network device since the identity verification component 47 determined 9 correct answers out of 10, which is 90% correct, thus satisfying (e.g., exceeding) the predetermined threshold of correct answers (e.g., 70%). As such, the identity verification component 98 may consider that the identity verification component 47 of the communication device of the user is indeed informed/aware of an embedding(s) that is similar to an embedding(s) determined/known by the network device pertaining to the user. The identity verification component 98 may utilize the identity verification component's 47 awareness of the same known embedding(s) to determine that the user's identity is verified.

On the other hand, if the correct answers were less than the predetermined threshold of correct answers of 70% in this example, the identity verification component 98 may determine that the user is not verified. In this regard, the identity verification component 98 may not validate the user to recover an account(s) associated with the network and/or may not allow the user to access the network.

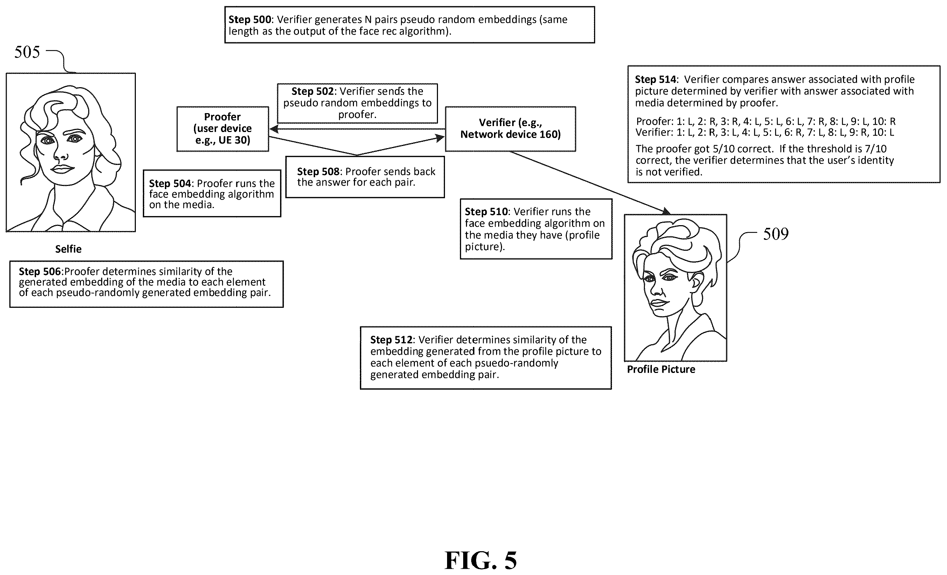

Referring to FIG. 5, a diagram illustrating another example identity verification process in accordance with an example of the present disclosure is provided. At step 500, the identity verification component 98 may generate a number N of pairs of pseudo random embeddings. The pairs of pseudo random embeddings may be a randomly generated list(s) of numbers determined in the manner described above. The N pairs of pseudo random embeddings may have a same length as an output of the identity verification component 98.In this example, N may be 10. In other examples, N may be any other suitable number.

In the example of FIG. 5, the length of the embeddings may be 5. In other examples, the length of the embeddings may be any other suitable length. In this example, the N (e.g., N = 10) pairs of pseudo random embeddings having length 5 of embeddings may be as follows.
1. L = [0.57, 0.36, 0.62, 0.00, 0.36], R = [0.12, 0.68, 0.42, 0.55, 0.17]
2. L = [0.56, 0.08, 0.43, 0.65, 0.21], R = [0.63, 0.03, 0.39, 0.55, 0.35]
3. L = [0.35, 0.28, 0.42, 0.70, 0.35], R = [0.39, 0.65, 0.04, 0.47, 0.43]
4. L = [0.39, 0.46, 0.43, 0.31, 0.58], R = [0.39, 0.74, 0.29, 0.00, 0.44]
5. L = [0.10, 0.41, 0.68, 0.41, 0.41], R = [0.04, 0.04, 0.53, 0.65, 0.53]
6. L = [0.41, 0.68, 0.00, 0.15, 0.57], R = [0.03, 0.38, 0.61, 0.38, 0.57]
7. L = [0.44, 0.22, 0.66, 0.05, 0.55], R = [0.52, 0.62, 0.28, 0.33, 0.38]
8. L = [0.00, 0.55, 0.51, 0.04, 0.65], R = [0.27, 0.59, 0.52, 0.52, 0.13]
9. L = [0.25, 0.83, 0.16, 0.41, 0.16], R = [0.32, 0.46, 0.56, 0.56, 0.18]
10. L = [0.76, 0.25, 0.35, 0.05, 0.46], R = [0.52, 0.58, 0.11, 0.11, 0.58]

At step 502, the identity verification component 98 of the network device (e.g., computing system 300) may send the N pairs of pseudo random embeddings to a communication device (e.g., UE 30) of a user. For purposes of illustration and not of limitation, the identity verification component 98 may send the N pairs of pseudo random embeddings to the communication device of the user in response to receipt of a message from the communication device requesting access to the network and/or an account recovery of the user associated with the network.

At step 504, in response to receipt of the N pairs of pseudo random embeddings, the identity verification component 47 of a communication device of the user may analyze media content such as, for example, an image of the user (e.g., a selfie image 505 of the user) and based on the image (e.g., the selfie image 505) of the user may determine an embedding(s) associated with the image such as, for example, [0.02, 0.49, 0.06, 0.05, 0.86].

At step 506, the identity verification component 47 of the communication device of the user may determine a similarity of the embedding that the identity verification component 47 generated e.g., [0.02, 0.49, 0.06, 0.05, 0.86] to the N pairs of pseudo random generated embeddings received from the identity verification component 98. For each of the N = 10 pairs, the identity verification component 47 may determine whether the left element of the pairs or the right element of the pairs is more similar to the embedding(s) [0.02, 0.49, 0.06, 0.05, 0.86]. The similarity between the N pairs of pseudo random embeddings generated by the identity verification component 98, and the embedding(s) [0.02, 0.49, 0.06, 0.05, 0.86] generated by the identity verification component 47 may be determined by the identity verification component 47 of the communication device as follows as answers.
1: L, L sim = 0.55, R sim = 0.54
2: R, L sim = 0.30, R sim = 0.39
3: R, L sim = 0.51, R sim = 0.73
4: L, L sim = 0.79, R sim = 0.78
5: L, L sim = 0.63, R sim = 0.55
6: L, L sim = 0.85, R sim = 0.74
7: R, L sim = 0.64, R sim = 0.68
8: L, L sim = 0.87, R sim = 0.47
9: L, L sim = 0.59, R sim = 0.46
10: R, L sim = 0.57, R sim = 0.82

The identity verification component 47 of the communication device may determine the similarity between the N pairs of pseudo random embeddings generated by the identity verification component 98, and the embedding(s) [0.02, 0.49, 0.06, 0.05, 0.86] based in part on performing a cosine similarity technique. As an example of similarity determination of pairs, as to Pair 1, the identity verification component 47 may determine that the left element of the pseudo random embeddings is more accurate than the left element in relation to the embedding(s) [0.02, 0.49, 0.06, 0.05, 0.86] since the L sim is higher being 0.55 than the lower R sim 0.54. As another example of the similarity determination of pairs, as to Pair 2, the identity verification component 47 may determine that the right element of the pseudo random embeddings is more accurate than the left element in relation to the embedding(s) [0.02, 0.49, 0.06, 0.05, 0.86] since the R sim is higher being 0.39 than the lower L sim 0.30. Furthermore, as another example of the similarity determination of pairs, as to Pair 3, the identity verification component 47 may determine that the right element of the pseudo random embeddings is more accurate than the left element in relation to the embeddings [0.02, 0.49, 0.06, 0.05, 0.86] since the R sim is higher being 0.73 than the lower L sim 0.51, so on and so forth. In some other examples, the similarity answers may be determined based in part on the identity verification component 47 implementing one or more techniques other than a cosine similarity technique.

At step 508, the identity verification component 47 of the communication device may send the answers as 1: L, 2: R, 3: R, 4: L, 5: L, 6: L, 7: R, 8: L, 9: L, 10: R for each of the pairs (e.g., pairs 1, 2, 3, 4, 5, 6, 7, 8, 9 and 10 above) to the network device (e.g., computing system 300). It is pointed out that the identity verification component 47 may not send any biometric data associated with the user of the communication device (e.g., UE 30) to the network device (e.g., computing system 300) and may not send any embeddings themselves to the network device and instead sent answers such as 1: L, 2: R, 3: R, 4: L, 5: L, 6: L, 7: R, 8: L, 9: L, 10: R for each of the 10 pairs to the network device. In this manner, the privacy of a user is preserved.

At step 510, the identity verification component 98 may analyze media content such as, for example, a profile picture 509 of a user and in this regard the identity verification component 98 may generate an embedding(s) such as [0.20, -0.10, 0.85, 0.04, 0.46].

It is pointed out that the embedding(s) generated as [0.20, -0.10, 0.85, 0.04, 0.46] by the identity verification component 98 based on profile picture 509 are different than the embedding(s) [0.02, 0.49, 0.06, 0.05, 0.86] generated by the identity verification component 47 based on the selfie image 505. Additionally, it is pointed out that the communication device (e.g., UE 30) of the user does not know the embedding(s) [0.20, -0.10, 0.85, 0.04, 0.46] generated by the identity verification component 98 of the network device since the identity verification component 98 may not send the embedding(s) [0.20, -0.10, 0.85, 0.04, 0.46] to the communication device.

At step 512, the identity verification component 98 may perform a similar operation as step 506 and may determine a similarity of the embedding(s) generated based on the picture profile 509 such as [0.20, -0.10, 0.85, 0.04, 0.46] to the N pairs of pseudo random generated embeddings. In this regard, the identity verification component 98 may determine for each of the N = 10 pairs whether the left element is more similar or the right element is more similar to the N pairs of pseudo random generated embeddings. The identity verification component 98 may determine the similarity (e.g., similarity scores) as follows as the correct answers.
1: L, L sim = 0.81, R sim = 0.46
2: R, L sim = 0.61, R sim = 0.65
3: L, L sim = 0.61, R sim = 0.31
4: L, L sim = 0.72, R sim = 0.51
5: L, L sim = 0.81, R sim = 0.74
6: R, L sim = 0.33, R sim = 0.80
7: L, L sim = 0.91, R sim = 0.51
8: L, L sim = 0.73, R sim = 0.57
9: R, L sim = 0.25, R sim = 0.64
10: L, L sim = 0.67, R sim = 0.46

In this regard, at step 514 the identity verification component 98 may compare the correct answers that it determined as 1: L, 2: R, 3: L, 4: L, 5: L, 6: R, 7: L, 8: L, 9: R, 10: L to the answers generated by the identity verification component 47 such as 1: L, 2: R, 3: R, 4: L, 5: L, 6: L, 7: R, 8: L, 9: L, 10: R. As described above, in some examples the correct answers may be determined in a manner similar to answering true or false questions, based on embeddings generated from media content a verifier has in comparison to pseudo random embeddings. There may be correct answers because it is determined in relation to known trusted media content the verifier has. Based on the comparison, the identity verification component 98 may determine that the identity verification component 47 determined some incorrect/wrong answers pertaining to Pair 3. For instance, regarding Pair 3, the identity verification component 47 determined the answer as 3: R, but the identity verification component 98 determined the correct answer as 3: L and regarding Pair 6, the identity verification component 47 determined the correct answer as 6: L, but the identity verification component 98 determined the correct answer as 6: R. The identity verification component 98 also determined incorrect/wrong answers pertaining to Pair 7, which the identity verification component 47 determined as 7: R, but which the identity verification component 98 determined the correct answer as 7: L. Regarding Pair 6, the identity verification component 47 determined the answer as 9: L, but the identity verification component 98 determined the correct answer as 9: R. Additionally, the identity verification component 98 determined incorrect/wrong answers pertaining to Pair 10, in which the identity verification component 47 determined the answer as 10: R, but the identity verification component 98 determined the correct answer as 10: L.

In an instance in which the predetermined threshold of correct answers is 70% (e.g., 7/10 correct), the identity verification component 98 may determine that the identity of the user of the communication device (e.g., UE 30) is not verified by the network device since the identity verification component 47 determined 5 correct answers out of 10 answers, and 5 incorrect answers, which is 50% correct, thus not satisfying (e.g., not equaling/exceeding) the predetermined threshold of correct answers (e.g., 70%). As such, the identity verification component 98 may consider that the identity verification component 47 of the communication device of the user is unaware of an embedding(s) that is similar to an embedding(s) determined/known by the network device pertaining to the user. In this regard, the identity verification component 98 of the network device may determine that the user's identity is not verified and may not validate or grant access to the network by the user and may not recover any account(s) associated with the network on behalf of the user.

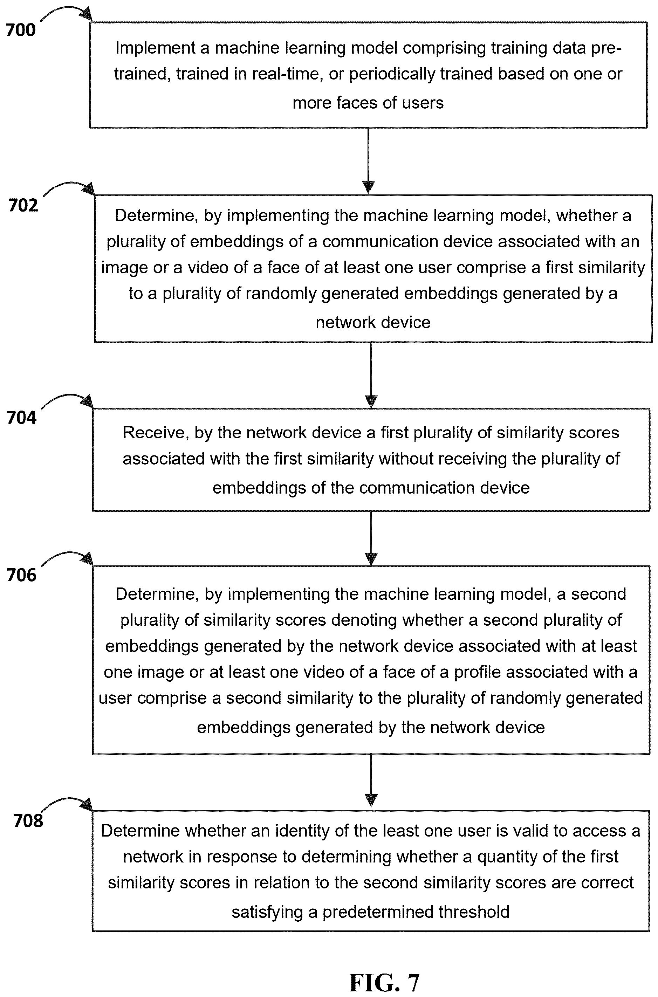

FIG. 6 illustrates an example of a machine learning framework 600 including machine learning model(s) 630 and a training database 650, in accordance with one or more examples of the present disclosure. The training database 650 may store training data 620. In some examples, the machine learning framework 600 may be hosted locally in a computing device or hosted remotely. By utilizing the training data 620 of the training database 650, the machine learning framework 600 may train the machine learning model(s) 630 to perform one or more functions, described herein, of the machine learning model(s) 630. In some examples, the machine learning model(s) 630 may be stored in a computing device. For example, the machine learning model(s) 630 may be embodied within a communication device (e.g., UE 30). In some other examples, the machine learning model(s) 630 may be embodied within another device (e.g., computing system 300). Additionally, the machine learning model(s) 630 may be processed by one or more processors (e.g., processor 32 of FIG. 2, coprocessor 81 of FIG. 3). In some examples, the machine learning model(s) 630 may be associated with operations (or performing operations) of FIG. 7. In some other examples, the machine learning model(s) 630 may be associated with other operations. In some examples, the machine learning model(s) 630 may be an example of the identity verification component 47 and/or the identity verification component 98.

In an example, the training data 620 may include attributes of thousands of objects. For example, the objects may be posters, brochures, billboards, menus, goods (e.g., packaged goods), books, groceries, Quick Response (QR) codes, smart home devices, home and outdoor items, household objects (e.g., furniture, kitchen appliances, etc.) and any other suitable objects. In some other examples, the objects may be smart devices (e.g., UEs 30, communication devices 105, 110, 115, 120), persons (e.g., users), newspapers, articles, flyers, pamphlets, signs, cars, content items (e.g., messages, notifications, images, videos, audio), and/or the like. Attributes may include, but are not limited to, the size, shape, orientation, position/location of the object(s), etc. The training data 620 employed by the machine learning model(s) 630 may be pre-trained, fixed or updated periodically. Alternatively, the training data 620 may be updated in real-time based upon the evaluations performed by the machine learning model(s) 630 in a non-training mode. This may be illustrated by the double-sided arrow connecting the machine learning model(s) 630 and stored training data 620 which may be stored in the training database 650. Some other examples of the training data 620 may include, but are not limited to, items of content determined as being associated with a network (e.g., the Internet, a social network, etc.), a platform (e.g., system 100), or the like.

In some example aspects, the training data 620 may be media content including one or more images, photos, pictures, videos or the like of faces and/or facial features of faces (e.g., faces of users). The training data 620 may be implemented/executed by the machine learning model(s) 630.

FIG. 7 illustrates an example flowchart illustrating operations for determining face recognition and/or identity verification to access a platform(s), network(s), system(s), or the like according to an example of the present disclosure. At operation 700, a device (e.g., a network device (e.g., computing system 300)) may implement a machine learning model including training data (e.g., training data 620) pre-trained, trained in real-time, or periodically trained based on one or more faces of users. In some examples the machine learning model may be machine learning model(s) 630. At operation 702, a device (e.g., a network device (e.g., computing system 300)) may determine, by implementing the machine learning model, whether a plurality of embeddings (e.g., [0.21, 0.13, 0.84, 0.05, 0.45]) of a communication device (e.g., UE 30) associated with an image (e.g., selfie image 406, selfie image 506) or a video of a face of at least one user includes a first similarity to a plurality of randomly generated embeddings (e.g., N = 10 pairs of pseudo random generated embeddings) generated by a network device (e.g., computing system 300).

At operation 704, a device (e.g., a network device (e.g., computing system 300)) may receive a first plurality of similarity scores associated with the first similarity without receiving the plurality of embeddings of the communication device. In some examples, the device may determine that without receiving the plurality of embeddings of the communication device includes/denotes not receiving biometric data (e.g., an image or video of a face) of the at least one user from the communication device.

At operation 706, a device (e.g., a network device (e.g., computing system 300)) may determine, by implementing the machine learning model, a second plurality of similarity scores denoting whether a second plurality of embeddings (e.g., [0.20, -0.10, 0.85, 0.04, 0.46]) generated by the network device associated with at least one image (e.g., profile picture 409, profile picture 509) or at least one video of a face of a profile associated with a user includes a second similarity to the plurality of randomly generated embeddings generated by the network device.

At operation 708, a device (e.g., a network device (e.g., computing system 300)) may determine whether an identity of the at least one user is valid to access a network in response to determining whether a quantity of the first similarity scores in relation to the second similarity scores are correct satisfying a predetermined threshold (e.g., 70%, 80%, etc.).

In one example embodiment, a method may involve generating a set of similarity scores, with at least three such scores being included in the initial group. Additionally, the machine learning model used in this process can be trained in real-time, allowing it to adapt and learn as new data becomes available. Furthermore, the execution of this machine learning model is not limited to a single device; instead, it can be carried out across a distributed computer network, enabling collaborative processing and scalability. Embodiments may verify a user's identity using advanced machine learning techniques. It consists of memory that stores computer-executable instructions and at least one processor that accesses this memory to carry out those instructions. The processor runs a machine learning model, which is trained using data from many users' faces, either in advance, in real-time, or through periodic updates. When a user attempts to verify their identity, the system compares a set of mathematical representations (called embeddings) generated by the user's device-based on images or videos of their face-with a set of randomly generated embeddings created by the network. Importantly, the user's device does not share the actual embeddings or biometric data with the network. Instead, it sends similarity scores that indicate how closely the user's data matches the network's random embeddings. The system also generates its own similarity scores by comparing its stored profile images or videos of the user with the same set of random embeddings. By comparing the similarity scores from both the user's device and the network, the system determines whether the user's identity is valid. If enough of the scores match (meeting a predetermined threshold) the user is granted access to the network. Before running the machine learning model, the system may receive a request from the user to recover an account or gain access to the network. The processor is capable of determining both when a user's identity is valid (and matches the stored profile) and when it is invalid (if the similarity scores do not meet the required threshold). Throughout this process, the system ensures that biometric data from the user's device is never directly received by the network, preserving user privacy. The system can work with at least three similarity scores, and the machine learning model can be trained in real-time. Additionally, the model can be executed across a distributed computer network, allowing for scalable and collaborative processing.

### Alternative Embodiments

The foregoing description of the embodiments has been presented for the purpose of illustration; it is not intended to be exhaustive or to limit the patent rights to the precise forms disclosed. Persons skilled in the relevant art can appreciate that many modifications and variations are possible in light of the above disclosure.

Some portions of this description describe the embodiments in terms of applications and symbolic representations of operations on information. These application descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as components, without loss of generality. The described operations and their associated components may be embodied in software, firmware, hardware, or any combinations thereof.

Any of the steps, operations, or processes described herein may be performed or implemented with one or more hardware or software components, alone or in combination with other devices. In one embodiment, a software component is implemented with a computer program product comprising a computer-readable medium containing computer program code, which can be executed by a computer processor for performing any or all of the steps, operations, or processes described.

Embodiments also may relate to an apparatus for performing the operations herein. This apparatus may be specially constructed for the required purposes, and/or it may comprise a computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Embodiments also may relate to a product that is produced by a computing process described herein. Such a product may comprise information resulting from a computing process, where the information is stored on a non-transitory, tangible computer readable storage medium and may include any embodiment of a computer program product or other data combination described herein.

Finally, the language used in the specification has been principally selected for readability and instructional purposes, and it may not have been selected to delineate or circumscribe the inventive subject matter. It is therefore intended that the scope of the patent rights be limited not by this detailed description, but rather by any claims that issue on an application based hereon. Accordingly, the disclosure of the embodiments is intended to be illustrative, but not limiting, of the scope of the patent rights, which is set forth in the following claims.

## Claims

1. A method comprising:
implementing, by one or more computer processors coupled to memory, a machine learning model comprising training data pre-trained, trained in real-time, or periodically trained based on one or more faces of users;
determining, by implementing the machine learning model, whether a plurality of embeddings of a communication device associated with an image or a video of a face of at least one user comprise a first similarity to a plurality of randomly generated embeddings generated by a network device;
receiving, by the network device, a first plurality of similarity scores associated with the first similarity without receiving the plurality of embeddings of the communication device;
determining, by implementing the machine learning model, a second plurality of similarity scores denoting whether a second plurality of embeddings generated by the network device associated with at least one image or at least one video of a face of a profile associated with a user comprise a second similarity to the plurality of randomly generated embeddings generated by the network device; and
determining whether an identity of the at least one user is valid to access a network in response to determining whether a quantity of the first similarity scores in relation to the second similarity scores are correct satisfying a predetermined threshold.

2. The method of claim 1, wherein prior to implementing the machine learning model comprising the training data, the method further comprises:
receiving at least one communication of the at least one user requesting recovery of at least one account associated with the network or requesting access to the network.

3. The method of claim 1 or claim 2, further comprising:
determining that the identity of the at least one user is valid to access the network in response to determining that the quantity of the first similarity scores in relation to the second similarity scores are correct satisfying the predetermined threshold; and preferably
determining that the identity of the at least one user matches an identity of the user in the response to the determining that the quantity of the first similarity scores in relation to the second similarity scores are correct satisfying the predetermined threshold; or
determining that the identity of the at least one user is invalid to access the network or invalid to recover an account associated with the network in response to determining that the quantity of the first similarity scores in relation to the second similarity scores fail to satisfy the predetermined threshold.

4. The method of any preceding claim, wherein:
receiving a first plurality of similarity scores associated with the first similarity without receiving the plurality of embeddings of the communication device comprises not receiving biometric data of the at least one user from the communication device.

5. The method of any preceding claim, wherein the first plurality of similarity scores comprises at least three similarity scores.

6. The method of any preceding claim, wherein the machine learning model is trained in real-time.

7. The method of any preceding claim, wherein the machine learning model is executed across a distributed computer network.

8. A system comprising:
memory that stores computer-executable instructions; and
at least one processor configured to access the memory and execute the computer-executable instructions to:
implement a machine learning model comprising training data pre-trained, trained in real-time, or periodically trained based on one or more faces of users;
determine, by implementing the machine learning model, whether a plurality of embeddings of a communication device associated with an image or a video of a face of at least one user comprise a first similarity to a plurality of randomly generated embeddings generated by a network device;
receive a first plurality of similarity scores associated with the first similarity without receiving the plurality of embeddings of the communication device;
determine, by implementing the machine learning model, a second plurality of similarity scores denoting whether a second plurality of embeddings generated by the network device associated with at least one image or at least one video of a face of a profile associated with a user comprise a second similarity to the plurality of randomly generated embeddings generated by the network device; and
determine whether an identity of the at least one user is valid to access a network in response to determining whether a quantity of the first similarity scores in relation to the second similarity scores are correct satisfying a predetermined threshold.

9. The system of claim 8, wherein the at least one processor is further configured to access the memory and execute the computer-executable instructions to:
receive, prior to implementing the machine learning model comprising the training data, at least one communication of the at least one user requesting recovery of at least one account associated with the network or requesting access to the network.

10. The system of claim 8 or claim 9, wherein the at least one processor is further configured to access the memory and execute the computer-executable instructions to:
determine that the identity of the at least one user is valid to access the network in response to determining that the quantity of the first similarity scores in relation to the second similarity scores are correct satisfying the predetermined threshold; and preferably.
determine that the identity of the at least one user matches an identity of the user in the response to the determining that the quantity of the first similarity scores in relation to the second similarity scores are correct satisfying the predetermined threshold; or
determine that the identity of the at least one user is invalid to access the network or invalid to recover an account associated with the network in response to determining that the quantity of the first similarity scores in relation to the second similarity scores fail to satisfy the predetermined threshold.

11. The system of any one of claims 8 to 10, wherein the at least one processor is further configured to access the memory and execute the computer-executable instructions to:
receive a first plurality of similarity scores associated with the first similarity without receiving biometric data of the at least one user from the communication device.

12. The system of any one of claims 8 to 11, wherein the first plurality of similarity scores comprises at least three similarity scores.

13. The system of any one of claims 8 to 12, wherein the machine learning model is executed across a distributed computer network.

14. A method comprising:
implementing, by one or more computer processors coupled to memory, a machine learning model comprising training data pre-trained, trained in real-time, or periodically trained based on one or more faces of users;
determining, by implementing the machine learning model, whether a plurality of embeddings of a communication device associated with an image or a video of a face of at least one user comprise a first similarity to a plurality of randomly generated embeddings generated by a network device;
receiving, by the network device, a first plurality of similarity scores associated with the first similarity without receiving the plurality of embeddings of the communication device;
determining, by implementing the machine learning model, a second plurality of similarity scores denoting whether a second plurality of embeddings generated by the network device associated with at least one image or at least one video of a face of a profile associated with a user comprise a second similarity to the plurality of randomly generated embeddings generated by the network device;
determining whether an identity of the at least one user is valid to access a network in response to determining whether a quantity of the first similarity scores in relation to the second similarity scores are correct satisfying a predetermined threshold; and
determining that the identity of the at least one user is valid to access the network in response to determining that the quantity of the first similarity scores in relation to the second similarity scores are correct satisfying the predetermined threshold.

15. The method of claim 14, wherein prior to implementing the machine learning model comprising the training data, the method further comprises:
receiving at least one communication of the at least one user requesting recovery of at least one account associated with the network or requesting access to the network.
